# EUROPÄISCHE PATENTSCHRIFT

(11) **EP 0 839 859 B1**
(45) Veröffentlichungstag und Bekanntmachung des Hinweises auf die Patenterteilung: **14.01.2004**
(21) Anmeldenummer: 97118860.2
(22) Anmeldetag: 30.10.1997
(51) Int. Cl.: C08J 11/00, C09D 7/00, B05B 15/12

(54) **Verfahren und Vorrichtung zur Aufbereitung von Overspray**
Method and apparatus for treating overspray
Procédé et dispositif de traitement de l'excédent d'un produit de revêtement pulvérisé.

(30) Priorität: 31.10.1996 DE 19643938
(43) Veröffentlichungstag der Anmeldung: 06.05.1998
(73) Patentinhaber: GRUNDIG Aktiengesellschaft, 90471 Nürnberg (DE)
(72) Erfinder: Fickenscher, Hans-Otto, 90762 Fürth (DE); Olszewski, Christian, 90762 Fürth (DE); Ferger, Manfred, 90762 Fürth (DE)

(56) Entgegenhaltungen:
- EP-A- 0 549 882
- EP-A- 0 574 972
- WO-A-86/06657
- WO-A-92/19686
- DE-A- 4 034 596
- DE-A- 4 038 706
- DE-C- 3 936 974

## Beschreibung

Die Erfindung betrifft ein Verfahren und eine Vorrichtung zur Aufbereitung von Overspray, aus wasserverdünnbaren Lacken, sogenannten Wasserlacken.

Bei der Aufbringung von Lacken auf metallische Oberflächen oder Kunststoffoberflächen gelingt es nicht, die Lacke restlos auf die zu beschichtenden Teile aufzubringen. Bei der Lackierung fällt in den Lackspritzkabinen sogenannter Overspray an. Der Overspray wird mittels Wasservorhängen oder ähnlicher Vorrichtungen aufgefangen. Um die Funktion der wasserführenden Leitungsrohre und Berieselungssysteme durch klebende Lackpartikel nicht zu stören und andererseits das umlaufende Wasser von den aufgenommen Inhaltsstoffen zu entsorgen, muß der im Wasser aufgefangene Overspray aus diesem extrahiert werden. Dieser so entstehende Lackschlamm muß größtenteils als Sondermüll behandelt werden.

Aus DE 39 36 974 ist die Verarbeitung von Lackschlamm zu formbeständigen Gegenständen bekannt. Der Lackschlamm wird aber einer weiteren Verarbeitung zu neuen Lacken nicht zugeführt, d.h. er geht für die ursprüngliche Verwendung verloren.

Aus DE 41 25 909 ist ein Verfahren zur Aufbereitung von Lackschlamm aus der Entsorgung von Lackspritzkabinen bekannt. Bei diesem Verfahren wird der Lackschlamm, bei einer Temperatur im Bereich von 50°C bis 200°C, getrocknet und gegebenenfalls zu einem Pulver zermahlen. Das so gewonnene Pulver wird einer neuen Verwertung, wie zum Beispiel zur Herstellung von Formteilen oder auch teilweise zur Rückgewinnung des Lackanteils, zugeführt. Das Verfahren ist aber sehr aufwendig und kostenintensiv.

Aufgabe der Erfindung ist es, ein Verfahren und eine Vorrichtung zu entwickeln, welche einen geschlossenen Kreislauf zwischen der Lackierkabine und der Lackschlammentsorgung bilden und ein Wiederverwerten des Wassers der Lackierkabine ermöglichen. Darüberhinaus soll der separierte Lackschlamm derart aufbereitet werden, daß er für den ursprünglichen Zweck wieder zum Einsatz kommen kann.

Diese Aufgabe wird, ausgehend von den Verfahrensmerkmalen des Anspruches 1 und den Merkmalen Anspruchs 3 gelöst.

Vorteilhaft bei dem erfindungsgemäßen Verfahren und der erfindungsgemäßen Vorrichtung ist der Umstand, daß der Verwender der Lackierkabine und des Lackes nicht zugleich auch der Hersteller des Lackes sein muß. Der resultierende Filterkuchen, das Restkoagulat, kann, nach der Trocknung, gesammelt, längere Zeit gelagert und dann dem Lackhersteller zur Weiterverarbeitung übergeben werden. Das Verfahren ist für alle Wasserlacke einsetzbar. Es kann ohne größeren Aufwand in einen bereits bestehenden Lackierbetrieb eingesetzt werden. Es ist besonders kostengünstig und vermeidet den Anfall von Sondermüll.

Vorteilhafte Ausgestaltungen der Erfindung sind in den abhängigen Ansprüchen angegeben.

Es zeigt:
- Fig. 1: eine schematische Darstellung der Vorrichtung zur Aufbereitung von Overspray,
- Fig. 2: eine schematische Darstellung des Wasserbehälters der Lackierkabine.

Die Erfindung wird im folgenden an einem exemplarischen Ausführungsbeispiel anhand der Zeichnungen erläutert. Das Ausführungsbeispiel ist keine erschöpfende Aufzählung der erfindungsgemäßen Ausgestaltungsmöglichkeiten, sondern hat nur beispielhaften Charakter.

Der Overspray reichert sich während des Lackiervorganges im Wasser der Lackierkabine an. Dort bildet der Overspray Festkörper. Wird ein Festkörpergehalt von ca. 3 bis 5 % im Wasser der Lackierkabine ermittelt, wird das Gemisch aus Wasser und Festkörpern in einen Flockungsbehälter gepumpt. In die Lackierkabine wird aus einem Filtratbehälter neues Wasser zugeführt. Im Flockungsbehälter befindet sich ein Rührwerk. Das Rührwerk ist in Betrieb, sobald das Wasser-Festkörper-Gemisch aus der Lackierkabine in den Flockungsbehälter gepumpt wird. Hierdurch wird vermieden, daß sich die im Wasser enthaltenen Festkörper im und/oder am Flockungsbehälter ab- oder anlagern.
Bei eingeschaltetem Rührwerk wird eine vordefinierte Menge eines Koagulierungsmittels zudosiert. Das Koagulierungsmittel besteht aus Salzen und organischen Polymeren. Auf gefährliche Inhaltsstoffe im Sinne der Richtlinie über gefährliche Stoffe 67/548/EWG kann verzichtet werden. Durch die Zugabe des Koagulierungsmittels und dem ständigen Rühren mittels des Rührwerkes, setzt im Flockungsbehälter ein Koagulierungsvorgang ein. Aus dem Wasser-Festkörper-Gemisch entsteht unter Einwirkung des Koagulierungsmittels ein sogenanntes Koagulat. Durch eine Prüfung wird der Endpunkt des Koagulierungsvorganges festgestellt. Als besonders vorteilhaft hat sich eine optische Prüfung gezeigt.

Ist der Koagulierungsvorgang abgeschlossen, wird das entstandene Koagulat einer Presse mittels einer Pumpe zugeführt. In der Presse, die in vorteilhafter Ausgestaltung eine Kammerfilterpresse ist, wird eine Abtrennung des Koagulats vom anhaftenden Wasser, dem sogenannten Filtrat, vorgenommen. Der hierbei entstehende Filterkuchen, auch als Restkoagulat bezeichnet, hat einen Wasseranteil von 50% bis 60%.

Eine Lagerfähigkeit des Filterkuchens läßt sich nur dadurch erreichen, daß eine Trocknung desselben durchgeführt wird. Die Lagerfähigkeit bzw. die Notwendigkeit der Lagerfähigkeit ergibt sich daraus, daß zumeist der Verwender des Lackes nicht der Hersteller ist und oftmals nur der Hersteller des Lackes eine Weiter- und/oder Wiederverwertung betreiben kann. Nur getrockneter Filterkuchen kann über eine längere Zeit gelagert werden. Der Trockungsvorgang ist bei maximal 50° C durchzuführen, damit die organischen Materialien im Filterkuchen nicht zu Schaden kommen und erhalten bleiben. Bei der Trockung des Filterkuchens ist weiterhin darauf zu achten, daß es besonders vorteilhaft ist, wenn das Wasser aus dem Filterkuchen herausgast. Dies ist bei Trocknungstemperaturen bis maximal 50°C der Fall. Das bei der Trocknung aus den Feststoffen herausgasende Wasser kondensiert an der Trocknungseinrichtung und wird als Kondensat in den Wasserkreislauf der Lackierkabine zurückgeführt. Es entstehen dadurch kaum nennenswerte Verluste im Wasserkreislauf der Lackierkabine. Außerdem werden hierdurch zusätzliche Emissionen vermieden.

Das Filtrat, das mittels der Presse abgetrennt wurde, wird ebenfalls dem Wasserkreislauf der Lackierkabine zugeführt. Hierzu ist ein Filtratbehälter vorgesehen, in dem das Wasser aufgefangen wird, bis es wieder der Lackierkabine zugeführt wird. Das Wasser wird mittels einer Pumpe aus dem Filtratbehälter in die Lackierkabine eingebracht.

Der getrocknete Filterkuchen, auch als getrocknetes Koagulat bezeichnet, wird nach einer Überprüfung der Zusammensetzung dem Lackhersteller zur Verarbeitung übergeben. Er wird in das gleiche Lacksystem eingearbeitet, aus dem er stammt. Zu beachten ist aber, daß der getrocknete Filterkuchen stets der selben Farbgruppe zugeordnet werden muß, aus der es hervorgegangen ist.

Auf diese Weise wird ein Rohstoffkreislauf auch echter Wiederverwertung erzielt. Das Recyclingprodukt ist mit Neuware absolut gleichwertig. Der getrocknete Filterkuchen wird gesammelt und später für die Herstellung neuer Lacke wiederverwertet, die gleichrangig zum Ausgangsprodukt zum Einsatz kommen. Es erfolgt eine originäre Wiederverwertung des Oversprays.

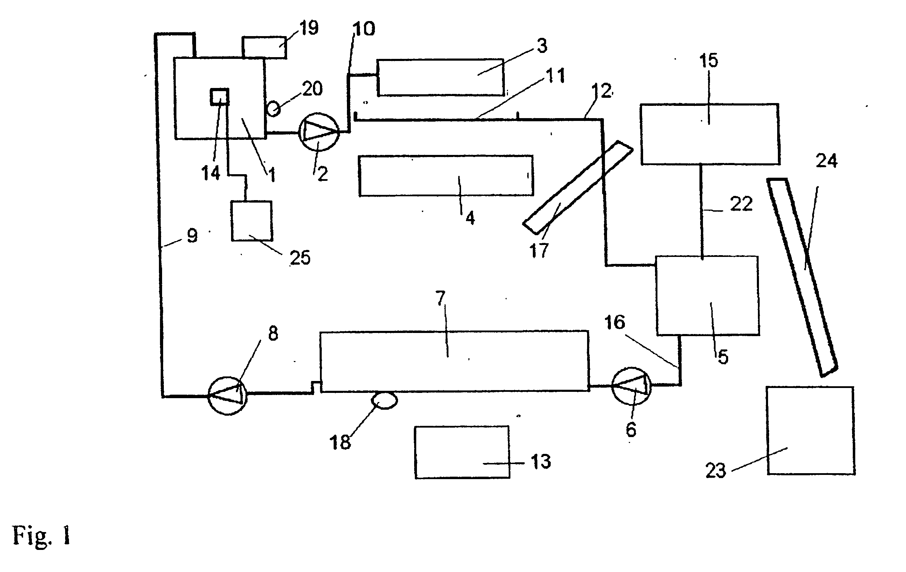

Die Vorrichtung, in Fig. 1 schematisch dargestellt, besteht aus einem Wasserbehälter 7, der Lackierkabine 13, einem Flockungsbehälter 1, einem Rührwerk 14, einer Presse 3, einer Auffangmulde 4 für den Filterkuchen, einem Filtratbehälter 5, sowie den Pumpen 2, 6, 8 und den Leitungen 9, 10, 12, 16, 22. Im weiteren ist eine Auffangvorrichtung 11 für das mittels der Presse 3 vom Koagulat abgetrennte Wasser bzw. Filtrat vorgesehen. Außerdem besitzt die Vorrichtung einen Trocknungseinrichtung 15 für den Filterkuchen, sowie zwei Transportschnecken 17 und 24. Außerdem sind Sensoren 18, 20, 21 vorgesehen, sowie ein Dosierer 19, ein Sammler 23 und eine Steuerungseinheit 25.

In der Lackierkabine 13 wird der Overspray mittels eines Wasservorhangs oder einer anderen Vorrichtung aufgefangen. Dieser Overspray, d.h. die Lackpartikel, reichert sich im Wasserbehälter 7 der Lackierkabine 13 als Festkörper an. In dem Wasserbehälter 7 der Lackierkabine 13 ist ein Sensor 18 angebracht, der den Festkörperanteil im Wasserbehälter überwacht. Sobald der Festkörperanteil mehr als 3 % beträgt, wird das Wasser im Wasserbehälter 7 der Lackierkabine 13 ausgetauscht. Mittels der Pumpe 8 wird der Inhalt des Wasserbehälters 7 der Lackierkabine 13 über die Rohrleitung 9 in den Flockungsbehälter 1 gepumpt. Anschließend wird aus dem Filtratbehälter 5 mittels der Pumpe 6 über die Rohrleitung 16 neues Wasser in den Wasserbehälter 7 der Lackierkabine 13 eingefüllt. In vorteilhafter Weise kann die Befüllung und Entleerung des Wasserbehälters 7 der Lackierkabine 13 gleichzeitig erfolgen, wodurch ein quasikontinuierlicher Betrieb möglich ist, d.h. die Lackierkabine 13 kann ohne Unterbrechung weiterbetrieben werden.

Im Flockungsbehälter 1 befindet sich das Rührwerk 14, das über die Steuerungseinheit 25 angesteuert wird. Dieses Rührwerk 14 hat die Aufgabe, das Wasser-Festkörper-Gemisch ständig in Bewegung zu halten, damit sich die Festkörper nicht im und/oder am Flockungsbehälter 1 ansammeln und verklumpen.
An den Flockungsbehälter 1 ist ein Dosierer 19 angebracht. Dieser Dosierer 19 gibt in Abhängigkeit des Füllungszustandes des Flockungsbehälters 1, der über einen Sensor 20 überwacht wird, die vordefinierte Menge eines Koagulierungsmittels zu. Sobald der Koagulationsvorgang abgeschlossen ist, wird über die Steuerungseinheit 25 das Rührwerk 14 abgestellt und mittels der Pumpe 2 der Inhalt des Flockungsbehälters 1 über die Rohrleitung 10 in die Presse 3 gepumpt.
In vorteilhafter Weise ist ein optischer Sensor an den Flockungsbehälter angebracht, der den Koagulierungsvorgang im Flockungsbehälter 1 überwacht. An der Trübung im Flockungsbehälter 1 erkennt der Sensor den Endzeitpunkt des Koagulierungsvorganges und stellt dann über die Steuerungseinheit 25 das Rührwerk 14 ab. Um den Sensor zur Überwachung des Koagulierungsvorgangs funktionsfähig zu halten, ist der Sensor mit einer Reinigungseinrichtung versehen, die verhindert, daß der Sensor verschmutzt und die Überwachung nicht durchführen kann.
Die Feststellung des Endzeitpunktes des Koagulierungsvorganges kann auch auf manuelle Weise erfolgen.

In der Presse 3 wird das Koagulat vom anhaftenden Wasser teilweise abgetrennt. Der hierbei entstehende Filterkuchen hat einen Wassergehalt von 50 - 60 %. Das mittels der Presse 3 abgetrennte Wasser - auch Filtrat bezeichnet - wird mittels der Auffangvorrichtung 11 aufgefangen. Anschließend wird es über die Rohrleitung 12 dem Filtratbehälter 5 zugeführt und steht zur späteren Verwendung in der Lackierkabine 13 zur Verfügung.

Der Filterkuchen, der aus der Presse 3 stammt, wird in der Auffangmulde 4 angesammelt. Um eine weitere Lagerung des Filterkuchens zu ermöglichen, wird der Filterkuchen über eine Transportschnecke 17 aus der Auffangmulde 4 zu einer Trocknungseinrichtung 15 transportiert. In einer weiteren vorteilhaften Ausgestaltung ist die Auffangmulde 4 derart ausgestaltet, daß diese transportabel ist und an die Trocknungseinrichtung 15 angedockt werden kann. Der Filterkuchen wird dann über eine Rutsche oder eine Fördereinrichtung der Trocknungseinrichtung 15 zugeführt.

Die Trocknungseinrichtung 15 ist in der Weise konzipiert, daß er mit einer Temperatur von maximal 50° C den Trocknungsvorgang des Filterkuchens durchführt. Hierdurch kommt das organische Material nicht zu Schaden. Im weiteren ist die Trocknungseinrichtung in der Weise konstruiert, daß das restliche im Filterkuchen noch gebundenen Wasser aus diesen herausgast und an der Trocknungseinrichtung 15 kondensiert. Diese beim Trocknungsvorgang entstehende Kondensat wird über eine Rohrleitung 22 dem Filtratbehälter 5 zugeführt und wird wiederum für die Lackierkabine 13 verwendet. Auf diese Weise kommt es zu kaum nennenswerten Verlusten im Wassersystem der Lackierkabine 13, es müssen lediglich die Verdunstungsverluste ausgeglichen werden. Frischwasser muß daher kaum zugeführt werden. Der getrocknete Filterkuchen, das sogenannte Restkoagulat, wird mittels der Transportschnecke 24 dem Sammler 23 zugeführt.

Eine weitere vorteilhafte Ausgestaltung der Trocknungseinrichtung sieht vor, daß die Trocknungseinrichtung 15 einen Siebboden aufweist. Der Filterkuchen liegt in der Trocknungseinrichtung 15 auf einem Siebboden und wird von unten her in einem warmen Luftstrom getrocknet. Das getrocknete Restkoagulat fällt durch den Siebboden und wird im Sammler 23, der unterhalb der Trocknungseinrichtung 15 angeordnet ist, aufgefangen und angesammelt.

Sobald eine ausreichende Menge im Sammler 23 vorhanden ist, holt der Lackhersteller diese Menge ab und leitet sie der Weiter- und/oder Wiederverwertung zu.

Zu beachten ist aber, daß stets eine annähernd gleiche Farbgebung bei der Lackierung von Gegenständen eingehalten werden muß, da stets nur gleichfarbige Lacke untereinander wieder verwendet werden können.

Werden Lacke in verschiedenen Farben verwendet, so sind mehrere Sammler 23 vorhanden. Nach jedem Wechsel der Lackierfarbe, muß die Lackierkabine gereinigt und von den Rückständen des vorher verwendeten Lackes gesäubert werden.

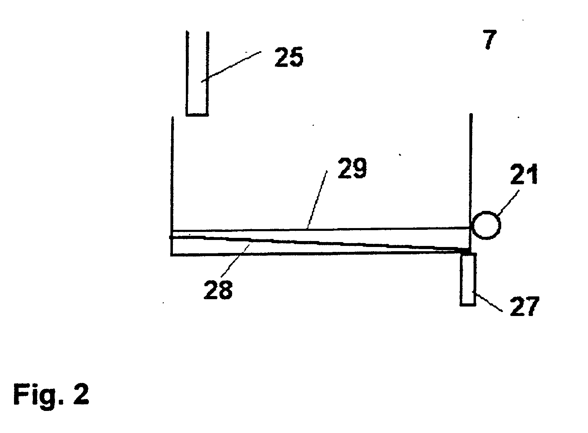

Eine Ausgestaltung des Wasserbehälters 7 der Lackierkabine 13 zur quasikontinuierlichen Befüllung und Entleerung wird anhand der Fig. 2 näher beschrieben.
Der Wasserbehälter 7 weist einen Boden 28 auf, der von jeder Seite des Wasserbehälters 7 zum Totalabfluß 27 hin abfällt. Wird der Totalabfluß 27 geöffnet, so ist gewährleistet, das der gesamte Inhalt des Wasserbehälters 7 abfließt. Zur Befüllung des Wasserbehälters 7 ist der Befüllungsstutzen 25 vorgesehen über welchen eine Wiederbefüllung erfolgt. Der Befüllungsstutzen 25 ist derart angebracht, daß er oberhalb des höchsten Punktes des Bodens 28 des Wasserbehälters angebracht ist. Hierdurch wird gewährleistet, daß bei einer Neubefüllung noch vorhandene Festkörper weggespült werden, wodurch der Wasserbehälter 7 gereinigt wird. Der Füllstand 29 des Wasserbehälters muß im Betrieb die höchste Stelle des Bodens 28 noch mit Wasser bedecken.
Wird das Wasser im Wasserbehälter 7 ausgetauscht, so wird zunächst der Totalabfluß 27 geöffnet, wenige Sekunden später wird über den Befüllungsstutzen 25 frisches Wasser zugeführt. Hierdurch werden eventuelle Ablagerungen am Boden 28 des Wasserbehälters 7 mit in den Totalausfluß 27 geschwemmt. Es kommt zu einer Reinigung des Bodens 28. Anschließend wird der Totalausfluß 27 wieder geschlossen und über den Einfüllstutzen 25 weiter frisches Wasser zugeführt, bis der Waserbehälter 7 wieder seinen Füllstand erreicht hat. Am Wasserbehälter 7 ist ein Sensor 21 angeordnet, der den Füllstand des Wasserbehälters 7 überwacht.

## Patentansprüche

1. Verfahren zur Aufbereitung von Overspray aus Wasserlacken, der in Lackierkabinen anfällt, wobei der Overspray im Wasser der Lackierkabine angesammelt wird und hierbei Festkörper bildet, das Wasser-Festkörper-Gemisch angesammelt wird, das Wasser-Festkörper-Gemisch mit einem Koagulierungsmittel vermischt wird, das entstehende Koagulat gepreßt wird, um das am Koagulat anhaftende Wasser abzutrennen, das vom Koagulat abgetrennte Wasser der Lackierkabine wieder zugeführt wird, der beim Pressen entstehende Filterkuchen getrocknet wird, bei dem Trocknungsvorgang noch im Filterkuchen vorhandenes Wasser herausgast und der Lackierkabine wieder zugeführt wird und der getrocknete Filterkuchen gesammelt wird
**dadurch gekennzeichnet, dass**
der Filterkuchen bei einer Temperatur von maximal 50°C getrocknet wird, von einem Sensor am Wasserbehälter der Lackierkabine der Festkörperanteil im Wasserbehälter der Lackierkabine überwacht wird und der Filterkuchen zur Herstellung von Lacken weiterverwertet wird.

2. Verfahren nach Anspruch 1,
**dadurch gekennzeichnet, dass**
der Koagulierungsvorgang optisch überwacht wird und mittels einer optischen Prüfung festgestellt wird, wann der Koagulierungsvorgang beendet ist.

3. Vorrichtung zur Aufbereitung von Overspray aus Wasserlacken, der in einer Lackierkabine (13) anfällt, wobei im Wasserbehälter (7) der Lackierkabine (13) sich der Overspray ansammelt und Festkörper bildet, das Wasser-Festkörper-Gemisch unter Zugabe eines Koagulierungsmittels in einem Flockungsbehälter (1) koaguliert, und hierbei ein Koagulat entsteht, eine Presse (3) das an das Koagulat anhaftende Wasser teilweise abtrennt, wodurch ein Filterkuchen entsteht,
**dadurch gekennzeichnet, dass**
der Flockungsbehälter (1) mit einem Rührwerk (14) ausgestattet ist,
an den Flockungsbehälter (1) ein Dosierer (19) angeordnet ist, der in den Flockungsbehälter (1) ein Koagulierungsmittel beigibt, eine Auffangvorrichtung (11) zum Auffangen des vom Koagulat in der Presse (3) abgetrennten Wassers bzw. Filtrats vorhanden ist, das über eine Rohrleitung (12) einem Filtratbehälter (5) zugeführt wird, eine Trocknungseinrichtung (15) zur Trocknung des Filterkuchens vorhanden ist, in welcher der Filterkuchen getrocknet wird, der Wasserbehälter (7) der Lackierkabine (13) seine benötigte Füllung über den Filtratbehälter (5) erhält, die Trocknungseinrichtung (15) beim Trocknungsvorgang eine Trocknungstemperatur bis maximal 50°C erreicht und am Wasserbehälter (7) der Lackierkabine (13) ein Sensor (18) vorhanden ist, der den Festkörperanteil im Wasserbehälter (7) der Lackierkabine (13) überwacht und der getrocknete Filterkuchen zur Herstellung von Lack weiterverwendet wird.

4. Vorrichtung nach einem der Ansprüche 3,
**dadurch gekennzeichnet, dass**
der Boden (28) des Wasserbehälters (7) von allen Seiten hin zum Totalabfluß (27) mit einem festen Gefälle abfällt, wodurch ein Ausschwemmen abgelagerter Festkörper ermöglicht ist und keine Verstopfungen des Totalabflußes (27) entstehen.

5. Vorrichtung nach einem der Ansprüche 3 oder 4,
**dadurch gekennzeichnet, dass**
am Flockungsbehälter (1) ein Sensor (20) zur Füllstandsüberwachung des Flockungsbehälters (1) und das Rührwerk (14) im Flockungsbehälter (1) vorgesehen ist und daß der Dosierer (19) in Abhängigkeit des Füllstandes des Flockungsbehälters (1) die Menge des zuzugebenden Koagulierungsmittels bestimmt.

6. Vorrichtung nach einem der Ansprüche 3 bis 5,
**dadurch gekennzeichnet, dass**
ein eine Steuerungseinheit (25) und ein Sensor, der den Koagulierungsvorgang überwacht, vorhanden ist, die nach Beendigung des Koagulierungsvorgangs das Rührwerk (14) abstellt und eine Pumpe (2) ansteuert, welche das entstandene Koagulat aus dem Flockungsbehälter (1) in die Presse (3) pumpt.

7. Vorrichtung nach einem der Ansprüche 3 bis 6,
**dadurch gekennzeichnet, dass**
eine Transporteinrichtung (17) für den Filterkuchen vorgesehen ist, welche den Filterkuchen aus der Auffangmulde (4) in die Trocknungseinrichtung (15) verbringt und eine weitere Transporteinrichtung (24) vorgesehen ist, welche den getrockneten Filterkuchen aus der Trocknungseinrichtung (15) einem Sammelbehälter (23) zuführt, eine Auffangmulde (4) vorgesehen ist, in welcher der in der Presse (3) entstehende Filterkuchen aufgefangen wird, die Presse (3) eine Kammerfilterpresse ist, die Trocknungseinrichtung (15) über eine Rohrleitung (22) mit dem Filtratbehälter (5) verbunden ist und daß die Rohrleitung (22) das in der Trocknungseinrichtung (15) aus dem Filterkuchen ausgasende Wasser dem Filtratbehälter (15) zuführt, die Transporteinrichtungen (17) und (23) Transportbänder, Schneckenföderer oder Transportrutschen sind und das Koagulierungsmittel aus Salzen und organischen Polymeren besteht.

## Claims

1. Method of treating overspray from water-based paints that accumulates in painting booths, wherein the overspray accumulates in the water of the painting booth and forms solids in the process, the water/solids mixture is collected, the water/solids mixture is mixed with a coagulant, the coagulate produced is pressed in order to separate the water adhering to the coagulate, the water separated from the coagulate is fed back to the painting booth, the filter cake produced during pressing is dried, water still present in the filter cake is gassed out during the drying process and is fed back to the painting booth and the dried filter cake is collected, **characterized in that** the filter cake is dried at a temperature of not more than 50°C, the solids content in the water tank of the painting booth is monitored by a sensor on the water tank of the painting booth and the filter cake is reused to produce paints.

2. Method according to Claim 1, **characterized in that** the coagulation process is monitored optically and when the coagulation process is complete is determined by an optical test.

3. Equipment for treating overspray from water-based paints that accumulates in a painting booth (13), wherein the overspray collects in the water tank (7) of the painting booth (13) and forms solids, the water/solids mixture is coagulated by adding a coagulant in a flocculation tank (1) and coagulate is produced in this process, a press (3) partially separates water adhering to the coagulate, which produces a filter cake, **characterized in that** the flocculation tank (1) is equipped with an agitator (14), a dispenser (19) that adds a coagulant to the flocculation tank (1) is mounted on the flocculation tank (1), a collecting device (11) is present for collecting the water or filtrate that is separated from the coagulate in the press (3) and that is fed via a pipeline (12) to a filtrate tank (5), a drying device (15) in which the filter cake is dried is present for drying the filter cake, the water tank (7) of the painting booth (13) receives its required filling via the filtrate tank (5), the drying device (15) reaches a drying temperature of up to not more than 50°C during the drying process and a sensor (18) is present on the water tank (7) of the painting booth (13) that monitors the solids content in the water tank (7) of the painting booth (13), and the dried filter cake is reused to produce paint.

4. Equipment according to Claim 3, **characterized in that** the bottom (28) of the water tank (7) slopes from all sides towards the master drain (27) with a fixed gradient, as a result of which flushing-out of deposited solids is made possible and no blockages occur in the master drain (27).

5. Equipment according to either of Claims 3 or 4, **characterized in that** a sensor (20) for monitoring the filling level of the flocculation tank (1) is provided on the flocculation tank (1) and the agitator (14) is provided in the flocculation tank (1), and **in that** the dispenser (19) determines the amount of coagulant to be added as a function of the filling level of the flocculation tank (1).

6. Equipment according to any one of Claims 3 to 5, **characterized in that** a control unit (25) and a sensor that monitors the coagulation process are present, that switches off the agitator (14) after completion of the coagulation process and activates a pump (2) that pumps the coagulate produced out of the flocculation tank (1) into the press (3).

7. Equipment according to any one of Claims 3 to 6, **characterized in that** a conveyor device (17) that conveys the filter cake from the collecting basin (4) to the drying device (15) is provided for the filter cake, and a further conveyor device (24) is provided that feeds the dried filter cake from the drying device (15) to a collecting tank (23), a collecting basin (4) is provided in which the filter cake produced in the press (3) is collected, the press (3) is a chamber filter press, the drying device (15) is connected via a pipeline (22) to the filtrate tank (5), and **in that** the pipeline (22) feeds the water gassing out of the filter cake in the drying device (15) to the filtrate tank (5), the conveyor devices (17) and (23) are conveyor belts, screw conveyors or transport chutes and the coagulant is composed of salts and organic polymers.

## Revendications

1. Procédé de traitement de l'excédent de pulvérisation de laques à l'eau qui se produit dans des cabines de peinture, dans lequel on collecte l'excédent dans l'eau de la cabine de peinture, lequel forme ici des corps solides, on collecte le mélange eau/corps solides, on mélange le mélange eau/corps solides avec un agent de coagulation, on comprime le coagulat produit pour séparer l'eau adhérant au coagulat, on ramène l'eau séparée du coagulat jusque dans la cabine de peinture, on fait sécher le gâteau de filtre produit lors de la compression, on fait dégazer l'eau encore présente dans le gâteau de filtre pendant l'opération de séchage et on la ramène à la cabine de peinture et on collecte le gâteau de filtre séché, **caractérisé en ce que** l'on fait sécher le gâteau de filtre à une température de 50°C au maximum, on surveille la part en corps solides dans le réservoir d'eau de la cabine de peinture par un détecteur prévu sur le réservoir d'eau de la cabine de peinture et on réutilise le gâteau de filtre pour produire des laques.

2. Procédé selon la revendication 1, **caractérisé en ce que** l'on surveille par voie optique l'opération de coagulation et on constate au moyen d'un contrôle optique l'instant auquel l'opération de coagulation est terminée.

3. Appareil de traitement de l'excédent de pulvérisation de laques à l'eau qui se produit dans une cabine de peinture (13), dans lequel l'excédent se collecte dans le réservoir d'eau (7) de la cabine de peinture (13) et forme des corps solides, le mélange eau/corps solides coagule sous addition d'agent de coagulation dans un récipient de floculation (1) et forme ici un coagulat, une presse (3) sépare partiellement l'eau adhérant au coagulat, dont résulte un gâteau de filtre, **caractérisé en ce que** le récipient de floculation (1) est pourvu d'un agitateur (14), **en ce qu'**un doseur (19) est agencé sur le récipient de floculation (1) et ajoute un agent de coagulation dans le récipient de floculation (1), **en ce qu'**il est prévu un dispositif de collecte (11) pour collecter de l'eau ou du filtrat séparé(e) du coagulat dans la presse (3), qui est amené à un récipient à filtrat (5) via une conduite tubulaire (12), **en ce qu'**il est prévu un dispositif de séchage (15) pour faire sécher le gâteau de filtre dans lequel le gâteau de filtre est séché, **en ce que** le réservoir d'eau (7) de la cabine de peinture (13) reçoit son remplissage requis via le récipient à filtrat (5), **en ce que** le dispositif de séchage (15) atteint une température de séchage de 50°C au maximum pendant l'opération de séchage, et **en ce qu'**il est prévu sur le réservoir d'eau (7) de la cabine de peinture (13) un détecteur (18) qui surveille la part en corps solides dans le réservoir d'eau (7) de la cabine de peinture (13), et **en ce que** le gâteau de filtre séché est ré-utilisé pour produire de la laque.

4. Appareil selon la revendication 3, **caractérisé en ce que** le fond (28) du réservoir d'eau (7) chute sous une pente fixe de tous les côtés vers l'évacuation totale (27), grâce à quoi un lavage des corps solides déposés est possible et il ne se produit aucun bouchage de l'évacuation totale (27).

5. Appareil selon l'une ou l'autre des revendications 3 et 4, **caractérisé en ce qu'**un détecteur (20) pour surveiller le niveau de remplissage du récipient de floculation (1) est prévu sur le récipient de floculation (1) et l'agitateur (14) est prévu dans le récipient de floculation, et **en ce que** le doseur (19) détermine la quantité de l'agent de coagulation à ajouter en fonction du niveau de remplissage du récipient de floculation (1).

6. Appareil selon l'une des revendications 3 à 5, **caractérisé en ce qu'**il est prévu une unité de commande (25) et un détecteur qui surveille l'opération de coagulation, qui met à l'arrêt l'agitateur (14) après terminaison de l'opération de coagulation et qui pilote une pompe (2) qui pompe le coagulat formé hors du récipient de floculation (1) jusque dans la presse (3).

7. Appareil selon l'une des revendications 3 à 6, **caractérisé en ce qu'**il est prévu un dispositif de transport (17) pour le gâteau de filtre, qui déplace le gâteau de filtre hors de la cavité de collecte (4) jusque dans le dispositif de séchage (15), et **en ce qu'**il est prévu un autre dispositif de transport (24) qui amène le gâteau de filtre séché hors du dispositif de séchage (15) jusque dans un récipient de collecte (23), **en ce qu'**il est prévu une cavité de collecte (4) dans laquelle le gâteau de filtre formé dans la presse (3) est collecté, **en ce que** la presse (3) est un filtre-presse à chambres, **en ce que** le dispositif de séchage (15) est relié au récipient à filtrat (5) via une conduite tubulaire (22), et **en ce que** la conduite tubulaire (22) amène l'eau dégazée hors du gâteau de filtre dans le dispositif de séchage (15) jusqu'au récipient à filtrat (5), **en ce que** les dispositifs de transport (17) et (23) sont des bandes de transport, des convoyeurs à vis ou des goulottes de transport, et **en ce que** l'agent de coagulation est constitué de sels et de polymères organiques.
